# EUROPEAN PATENT SPECIFICATION

(11) **EP 4 345 297 B1**
(45) Date of publication and mention of the grant of the patent: **05.11.2025**
(21) Application number: 23382633.8
(22) Date of filing: 21.06.2023
(51) Int. Cl.: F03D 13/10, E04C 5/08, E04C 3/34, B66C 23/32, B66C 23/20

(54) **TOWER OF A WIND TURBINE**
TURM EINER WINDENERGIEANLAGE
TOUR D'ÉOLIENNE

(30) Priority: 27.09.2022 EP 22382885; 27.09.2022 EP 22382884
(43) Date of publication of application: 03.04.2024
(73) Proprietor: Nordex Energy Spain, S.A.U., 31395 Barasoain (Navarra) (ES); Nordex Energy SE & Co. KG, 22419 Hamburg (DE)
(72) Inventor: Garduño, Aitor, Barasoain (ES); Garcia, Ivan, Barasoain (ES); Varela, Fernando, Barasoain (ES); Gonzalez, Miguel, Barasoain (ES); Rubio Guillen, Iñigo, Barasoain (ES); Arlaban, Teresa, Barasoain (ES)
(74) Representative: Pons IP

(56) References cited:
- EP-A1- 3 306 079
- EP-A2- 2 402 529
- CN-B- 104 121 155
- DE-A1- 102010 039 796

## Description

### OBJECT OF THE INVENTION

The object of the invention is a tower of a wind turbine.

### BACKGROUND OF THE INVENTION

The wind turbines comprise a tower, a nacelle which houses the electrical generator and a rotor formed in turn by at least two blades. The tower of the wind turbine supports the nacelle and the rotor. Large wind turbines have steel, lattice, or reinforced concrete towers or even mixed-type towers, the latter comprising sections of different materials, for example, a lower section of concrete and an upper section of steel or lattice.

Due to the height of the wind turbines, the tower has to be divided into several annular sections which are stacked during the wind turbine assembly stage thus forming the full height of the tower. Dividing the tower into sections has the advantage that each section has a size such that its transport by road or rail is easier.

One of the most commonly used materials for large towers is concrete, since it involves competitive costs and performance compared to those to produce steel towers of similar characteristics. However, the weight of each concrete tower section can easily exceed one hundred tons, this fact being infrequent for metal tower sections, so stacking the concrete sections requires heavy-tonnage lifting and positioning means. The cost of using such lifting and positioning means, which may be for example a crane, is directly related to the tonnage and height that it is capable of handling and the time of use thereof. This high-tonnage crane is also used for lifting and positioning the nacelle, as the weight of the nacelle may also exceed 100 tons.

It is known in the state of the art, the towers for wind turbines being of the kind of "concrete-steel hybrid" towers comprising a first tower section comprising at least two concrete segments and further comprising a second tower section made of steel, the tower further comprising an adapter for connecting the two tower sections, and the towers for wind turbines being of the kind of "full-concrete" towers comprising an adapter disposed in the upper part of the upper concrete tower section and below a wind turbine component, the wind turbine component being preferably the yaw bearing of the nacelle.

In a first embodiment, the adapter comprises an annular concrete element and a steel element that has at least one annular flange, wherein the flange covers an upper surface of the concrete element of the adapter in installation position. Consequently, this adapter consists of concrete and steel, in which case the steel element is cast directly with the concrete element of the adapter. Here, the annular flange of the steel element is fully grouted in the concrete without air inclusions. In a related method for building the tower, the steel element with an annular flange is initially provided for building the adapter, which is installed headlong in a ring-shaped formwork. Afterwards, concrete is placed in the formwork and as a result of that, the annular concrete element of the adapter can be made. Here, the concrete is placed directly on the underside of the flange so that, in the finished adapter, the flange is fully grouted establishing a connection between the concrete element and the steel element of the adapter.

In a second embodiment, the adapter is made entirely of steel, and a grout layer must be disposed between the adapter and the first tower section made of concrete to establish a connection between the steel adapter and the concrete section.

However, in both embodiments, the adapter is joined to the immediately below concrete part or section by means of bolts passing through a first set of holes. The adapter may also comprise a second set of holes for allowing the passage of tensioning elements of the tower. The first set of holes and the second set of holes are disposed in concentrical circumferences with different radius, thus needing more material and complex system for attaching auxiliary devices of the tower or thus resulting in technical solutions wherein the disposition of the tensioning elements far from the inner tower wall not carrying out an optimum post-tensioning of the concrete wall.

Currently, some wind turbine towers with concrete segments include a geometry of the adapter which comprises a concrete part comprising an inward thickness increase towards the inside of the tower with respect to the wall thickness in a central part of the concrete part and a steel part. This inward thickness increase towards the inside of the tower is necessary for providing a wider contact area for the concrete-grout (or concrete-resin) interfaces in the horizontal joint between the concrete part and the steel part of the adapter so that the stresses can be stood by the filler material (grout or resin) used in the horizontal joints, allowing for some manufacturing or pouring deficiencies of such filler material.

However, this state-of-the-art geometry gives rise to undesirable local effects in the concrete segments, such as:
- Local bending moments in transition region from the central part and the connection area of the concrete part that increase concrete compressive stresses and that require additional reinforcement for tensile forces at the beginning of the connection area; and
- Circumferential compressive and tensile stresses close to thickness changes.

CN104121155B discloses a prestressed concrete and steel combined tower on which a self-support wind generator set can be assembled and an anchoring method of the prestressed concrete and steel combined tower. The prestressed concrete and steel combined tower comprises a fan foundation and a steel tower cylinder section above the fan foundation and further comprises a prefabricated concrete tower cylinder section and a prefabricated concrete conversion section, and the fan foundation, the prefabricated concrete tower cylinder section, the prefabricated concrete conversion section and the steel tower cylinder section are sequentially connected through prestress anchor sheaves in the sequence from bottom to top. According to the prestressed concrete and steel combined tower on which the self-support wind generator set can be assembled and the anchoring method of the prestressed concrete and steel combined tower, a tower used for the wind generator set is divided into the concrete part and the steel part which are connected through the prefabricated concrete conversion section, and concrete is in a pre-compression state through tensioning of the internal and external prestress anchor sheaves.

The present invention solves the problems described above.

### DESCRIPTION OF THE INVENTION

The invention relates to a tower of a wind turbine comprising:
- at least one first tower section;
- an adapter disposed between the at least one first tower section and at least one second tower section or a wind turbine component,

wherein the at least one first tower section is a concrete tower section comprising an upper flange comprising an external diameter; and
wherein the adapter comprises
   - a lower flange configured to join the adapter to the upper flange of the at least one first tower section;
wherein the lower flange of the adapter comprises an external diameter;
wherein the external diameter of the upper flange of the at least one first tower section is greater than the external diameter of the lower flange of the adapter.

In this way, the tower so constituted allows to distribute the loads of the elements disposed above the adapter in a uniform way along the thickness of the tower comprising the at least one first tower section

Moreover, this disposition of the adapter with respect to the at least one first tower section allows to gain access to the upper flange of the at least one first tower section once the adapter is disposed onto the at least one first tower section. This makes possible to carry out different operations on the upper flange of the at least one first tower even if the adapter is disposed onto the at least one first tower section.

Optionally, the upper flange of the at least one first tower section comprises:
- a first set of holes intended to accommodate, in use, the plurality of tensioning elements; and
- a second set of holes intended accommodate, in use, the plurality of bolts.

Optionally, the first set of holes and the second set of holes are disposed in a single circumferential row.

Optionally, the lower flange of the adapter comprises:
- a first set of holes intended to accommodate, in use, the plurality of tensioning elements; and
- a second set of holes intended accommodate, in use, the plurality of bolts.

Optionally, the first set of holes and the second set of holes are disposed in a single circumferential row.

According to the invention, the at least one first tower section comprises at least one concrete segment which in turn comprises:
- a central area comprising an inner surface and an outer surface located below the upper flange of the at least one first tower section, and an imaginary central surface located at the same distance from the inner surface as from the outer surface;
wherein a vertical projection of a circumference defined by the external diameter of the lower flange of the adapter intersects with the imaginary central surface.

In this way, a load path coming from the upper part of the tower, above the adapter, and intended to be transmitted along the central area, is transmitted by the imaginary central surface.

Optionally, the vertical projection of the circumference defined by the external diameter of the lower flange of the adapter further intersects with the outer surface of the at least one concrete segment in an upper end of the central area.

Optionally, the adapter further comprises a central portion joined to the lower flange, wherein both of the central portion and the lower flange comprises an inner surface, wherein the imaginary central surface intersects with the inner surface.

Optionally, the imaginary central surface intersects with the inner surface in a vicinity of the lower flange.

So, the tower has an inner adapter-free area above the upper flange of the adapter that allows to gain access to the inner part of the upper flange of the at least one first tower section once the adapter is disposed onto the at least one first tower section to carry out different operations on the upper flange of tte at least one first tower even if the adapter is disposed onto the at least one first tower section, e.g., a leveling step using grout.

Optionally, the inner surface of the central area comprises an internal diameter, wherein the external diameter of the lower flange of the adapter is smaller than the internal diameter of the inner surface of the central area of the at least one concrete segment.

Optionally, the lower flange of the adapter comprises an internal diameter and the upper flange of the at least one first tower section comprises an internal diameter, wherein an offset between the external diameter of the upper flange of the at least one first tower section and the external diameter of the lower flange of the adapter is substantially the same that an offset between the internal diameter of the lower flange of the adapter and the internal diameter of the upper flange of the at least one first tower section.

So, the lower flange of the adapter is substantially centered within the upper flange of the at least one first tower section.

Optionally, the central area of the at least one concrete segment of the at least one first tower section comprises a first wall thickness defined as the distance between the inner surface and the outer surface; and wherein the at least one concrete segment of the at least one first tower section comprises:
- at least one upper connection area comprising the upper flange, wherein the at least one upper connection area is configured to be connected to the adapter by means of the upper flange, wherein the at least one upper connection area comprises a second wall thickness being bigger than the first wall thickness.

Optionally, the second wall thickness comprises an inward thickness increase with respect to the first wall thickness.

Optionally, the second wall thickness comprises an outward thickness increase with respect to the first wall thickness.

Optionally, the outer surface of the central area comprises a first slope with regard to the central surface and the outward thickness increase of the second wall thickness comprises at least one oblique part which in turn comprises a second slope with regard to the central surface, wherein the second slope is greater that the first slope.

According to the invention, a projection of the outer surface of the central area of the at least one concrete segment at a height wherein the lower flange of the adapter is disposed, substantially coincides with the external diameter of the adapter.

Optionally, the tower further comprises joining elements configured to join the adapter to the at least one first tower section, preferably bolts and nuts.

Optionally, the joining means further comprises tensioning elements also configured to tension the tower.

Optionally, the joining means comprises an axis, wherein the upper flange of the at least one first concrete section comprises an inner third, a central third and an outer third, wherein the axis of the joining means goes through the upper flange of the at least one first concrete section in the central third.

Optionally, the tower comprises a central vertical axis and each of the joining means comprises an axis, wherein the axis of the joining means or its projection is closer to the central vertical axis than the inner surface of the central area.

Optionally, the adapter further comprises an upper flange configured to join the adapter to the at least one second tower section or to the wind turbine component.

### DESCRIPTION OF THE FIGURES

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

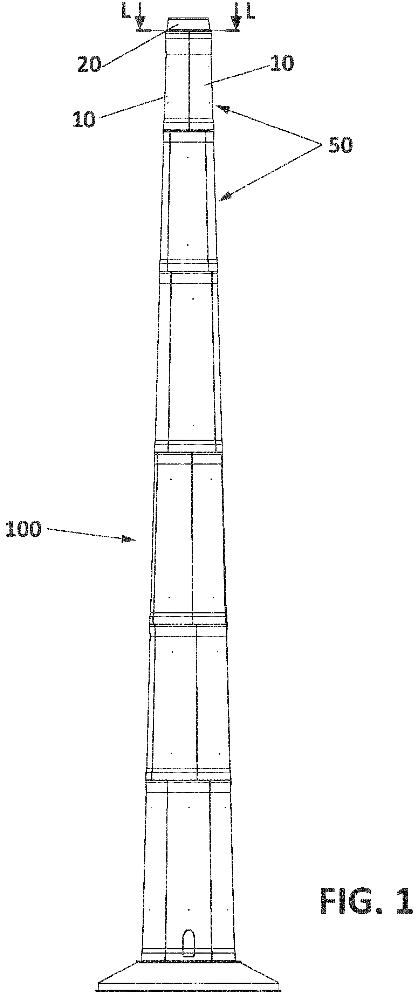

Figure 1 shows an elevation view of a tower of a wind turbine comprising an adapter according to the invention and a concrete section according to the invention.

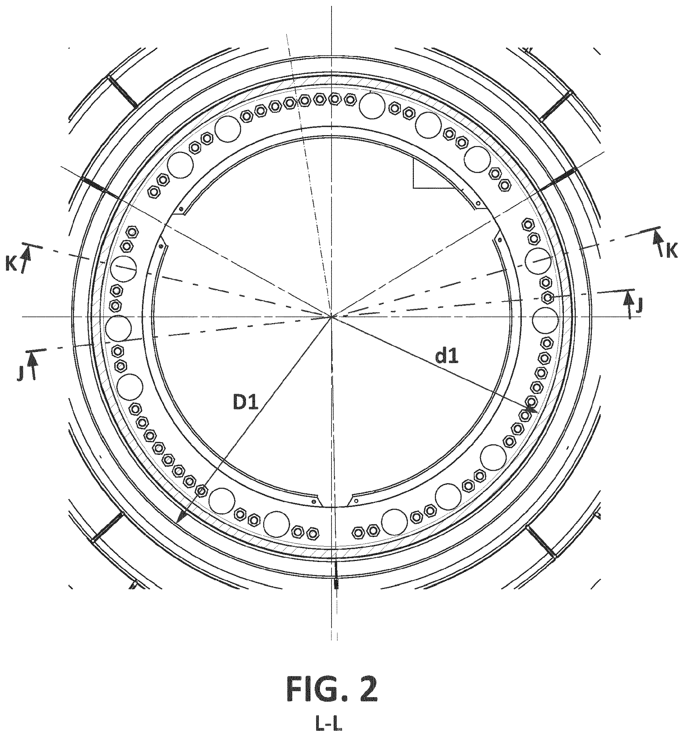

Figure 2 shows a detail of section view LL of the tower of Figure 1 according to a first embodiment, wherein the adapter has been partially deleted to shown the upper flange of the concrete section of the tower.

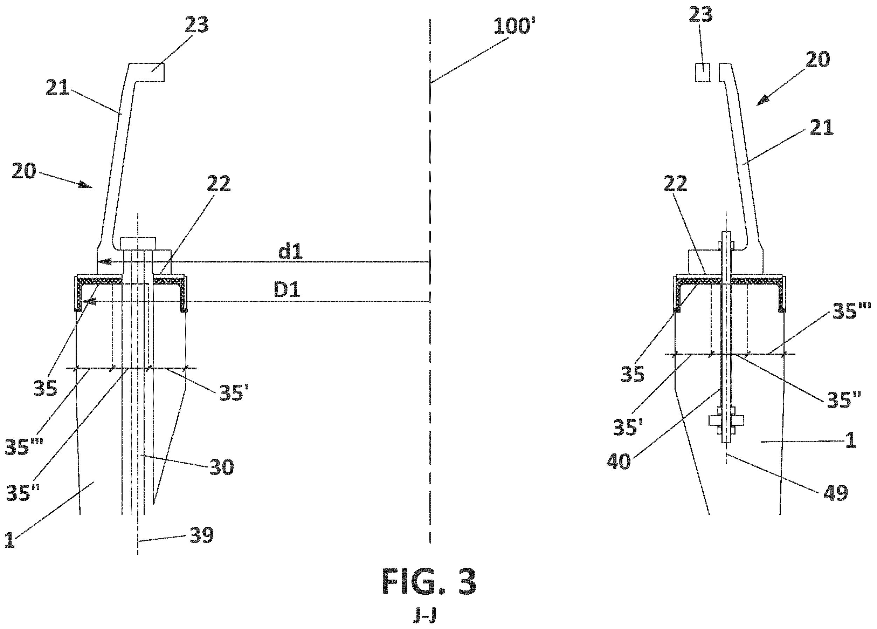

Figure 3 shows a section view JJ of Figure 2.

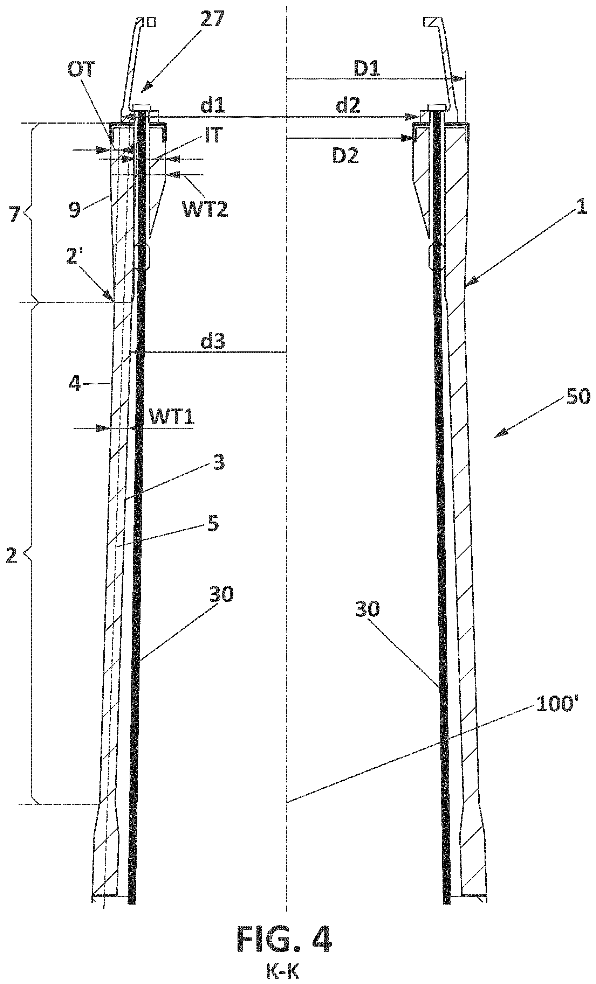

Figure 4 shows a partial section view KK of Figure 2.

### PREFERRED EMBODIMENT OF THE INVENTION

The following is a detailed description of the tower of the wind turbine, wherein the tower (100) comprises:
- at least one first tower section (50);
- an adapter (20) disposed between the at least one first tower section (50) and at least one second tower section or a wind turbine component,

wherein the at least one first tower section (50) is a concrete tower section comprising an upper flange (35) comprising an external diameter (D1); and wherein the adapter (20) comprises:
   - a central portion (21);
   - a lower flange (22) configured to join the adapter (20) to the upper flange (35) of the at least one first tower section (50);
   - an upper flange (23) configured to join the adapter (20) to the at least one second tower section or to the wind turbine component.
wherein the lower flange (22) of the adapter (20) comprises an external diameter (d1); and
wherein the external diameter (D1) of the upper flange (35) of the at least one first tower section (50) is greater than the external diameter (d1) of the lower flange (22) of the adapter (20).

The at least one first tower section (50) comprises at least one concrete segment (1) which in turn comprises:
- a central area (2) comprising an inner surface (3) and an outer surface (4) located below the upper flange (35) of the at least one first tower section (50), and an imaginary central surface (5) located at the same distance from the inner surface (3) as from the outer surface (4);
wherein a vertical projection of a circumference defined by the external diameter (d1) of the lower flange (22) of the adapter (20) intersects with the imaginary central surface (5).

The vertical projection of the circumference defined by the external diameter (d1) of the lower flange (22) of the adapter (20) further intersects with the outer surface (4) of the at least one concrete segment (1) in an upper end (2') of the central area (2).

The adapter (20) further comprises a central portion (21) joined to the lower flange (22), wherein both of the central portion (21) and the lower flange (22) comprises an inner surface (27), wherein the imaginary central surface (5) intersects with the inner surface (27), preferably in a vicinity of the lower flange (22).

The inner surface (3) of the central area (2) comprises an internal diameter (d3), wherein the external diameter (d1) of the lower flange (22) of the adapter (20) is smaller than the internal diameter (D3) of the inner surface (3) of the central area (2) of the at least one concrete segment (1), preferably in a lower part of the central area (2) of the at least one concrete segment (1).

In this embodiment, the lower flange (22) of the adapter (20) comprises an internal diameter (d2) and the upper flange (35) of the at least one first tower section (50) comprises an internal diameter (D2), wherein an offset between the external diameter (D1) of the upper flange (35) of the at least one first tower section (50) and the external diameter (d1) of the lower flange (22) of the adapter (20) is substantially the same that an offset between the internal diameter (d2) of the lower flange (22) of the adapter (20) and the internal diameter (D2) of the upper flange (35) of the at least one first tower section (50).

Preferably, a ratio between the internal diameter (d2) of the lower flange (22) of the adapter (20) and the internal diameter (D2) of the upper flange (35) of the at least one first tower section (50), and the offset between the external diameter (D1) of the upper flange (35) of the at least one first tower section (50) and the external diameter (d1) of the lower flange (22) of the adapter (20), is between 0,5 and 0,7.

The central area (2) of the at least one concrete segment (1) of the at least one first tower section (50) comprises a first wall thickness (WT1) defined as the distance between the inner surface (3) and the outer surface (4); and wherein the at least one concrete segment (1) of the at least one first tower section (50) comprises:
- at least one upper connection area (7) comprising the upper flange (35), wherein the at least one upper connection area (7) is configured to be connected to the adapter (20) by means of the upper flange (35), wherein the at least one upper connection area (7) comprises a second wall thickness (WT2) being bigger than the first wall thickness (WT1)

,wherein the second wall thickness (WT2) comprises an inward thickness increase (IT) with respect to the first wall thickness (WT1),
wherein the second wall thickness (WT2) comprises an outward thickness increase (OT) with respect to the first wall thickness (WT1).

In this embodiment, the outer surface (4) of the central area (2) comprises a first slope with regard to the central surface (5) and the outward thickness increase (OT) of the second wall thickness (WT2) comprises at least one oblique part (9) which in turn comprises a second slope with regard to the central surface (5), wherein the second slope is greater that the first slope.

In this embodiment, a projection of the outer surface (4) of the central area (2) of the at least one concrete segment (1) at a height wherein the lower flange (22) of the adapter (20) is disposed, substantially coincides with the external diameter (d1) of the adapter (20).

The tower (100) further comprises joining elements (30, 40) configured to join the adapter (20) to the at least one first tower section (50), wherein the joining means (30, 40) comprises tensioning elements (30) also configured to tension the tower and/or bolts (40) configured to join the adapter (20) to the at least one first concrete section (50).

In this embodiment, each one of the joining means (30, 40) comprises an axis (39, 49), wherein the upper flange (35) of the at least one first concrete section (50) comprises an inner third (35'), a central third (35) and an outer third (35"), wherein the axis (39, 49) of the joining means (30, 40) goes through the upper flange (35) of the at least one first concrete section (50) in the central third (35").

The tower (100) comprises a central vertical axis (100') and the joining means (30, 40) comprises an axis (39, 49), wherein the axis (39, 49) of the joining means (30, 40) or its projection is closer to the central vertical axis (100') than the inner surface (3) of the central area (2).

## Claims

1. Tower (100) of a wind turbine comprising:
- at least one first tower section (50);
- an adapter (20) disposed between the at least one first tower section (50) and at least one second tower section or a wind turbine component,
wherein the at least one first tower section (50) is a concrete tower section comprising an upper flange (35) comprising an external diameter (D1); and wherein the adapter (20) comprises:
- a lower flange (22) configured to join the adapter (20) to the upper flange (35) of the at least one first tower section (50);
wherein the lower flange (22) of the adapter (20) comprises an external diameter (d1);
wherein the external diameter (D1) of the upper flange (35) of the at least one first tower section (50) is greater than the external diameter (d1) of the lower flange (22) of the adapter (20);
wherein the at least one first tower section (50) comprises at least one concrete segment (1) which in turn comprises:
- a central area (2) comprising an inner surface (3) and an outer surface (4) located below the upper flange (35) of the at least one first tower section (50), and an imaginary central surface (5) located at the same distance from the inner surface (3) as from the outer surface (4);
wherein a vertical projection of a circumference defined by the external diameter (d1) of the lower flange (22) of the adapter (20) intersects with the imaginary central surface (5); and
**characterized in that** a projection of the outer surface (4) of the central area (2) of the at least one concrete segment (1) at a height wherein the lower flange (22) of the adapter (20) is disposed, substantially coincides with the external diameter (d1) of the adapter (20).

2. The tower (100) of claim 1, wherein the vertical projection of the circumference defined by the external diameter (d1) of the lower flange (22) of the adapter (20) further intersects with the outer surface (4) of the at least one concrete segment (1) in an upper end (2') of the central area (2).

3. The tower (100) of any of claims 1 or 2, wherein the adapter (20) further comprises a central portion (21)joined to the lower flange (22), wherein both of the central portion (21) and the lower flange (22) comprises an inner surface (27), wherein the imaginary central surface (5) intersects with the inner surface (27).

4. The tower (100) of claim 3, wherein the imaginary central surface (5) intersects with the inner surface (27) in a vicinity of the lower flange (22).

5. The tower (100) of any of previous claims, wherein the inner surface (3) of the central area (2) comprises an internal diameter (d3), wherein the external diameter (d1) of the lower flange (22) of the adapter (20) is smaller than the internal diameter (D3) of the inner surface (3) of the central area (2) of the at least one concrete segment (1).

6. The tower (100) of any of previous claims, wherein the lower flange (22) of the adapter (20) comprises an internal diameter (d2) and the upper flange (35) of the at least one first tower section (50) comprises an internal diameter (D2), wherein an offset between the external diameter (D1) of the upper flange (35) of the at least one first tower section (50) and the external diameter (d1) of the lower flange (22) of the adapter (20) is substantially the same that an offset between the internal diameter (d2) of the lower flange (22) of the adapter (20) and the internal diameter (D2) of the upper flange (35) of the at least one first tower section (50).

7. The tower (100) of any of claims 1 to 4, wherein the central area (2) of the at least one concrete segment (1) of the at least one first tower section (50) comprises a first wall thickness (WT1) defined as the distance between the inner surface (3) and the outer surface (4); and
wherein the at least one concrete segment (1) of the at least one first tower section (50) comprises:
- at least one upper connection area (7) comprising the upper flange (35), wherein the at least one upper connection area (7) is configured to be connected to the adapter (20) by means of the upper flange (35), wherein the at least one upper connection area (7) comprises a second wall thickness (WT2) being bigger than the first wall thickness (WT1).

8. The tower (100) of claim 7, wherein the second wall thickness (WT2) comprises an inward thickness increase (IT) with respect to the first wall thickness (WT1).

9. The tower (100) of any of claims 7 or 8, wherein the second wall thickness (WT2) comprises an outward thickness increase (OT) with respect to the first wall thickness (WT1).

10. The tower (100) of claim 9, wherein the outer surface (4) of the central area (2) comprises a first slope with regard to the central surface (5) and the outward thickness increase (OT) of the second wall thickness (WT2) comprises at least one oblique part (9) which in turn comprises a second slope with regard to the central surface (5), wherein the second slope is greater that the first slope.

11. The tower (100) of any of previous claims, further comprising joining elements (30, 40) configured to join the adapter (20) to the at least one first tower section (50).

12. The tower (100) of claim 11, wherein each of the joining means (30, 40) comprises tensioning elements (30) also configured to tension the tower and/or bolts (40) configured to join the adapter (20) to the at least one first concrete section (50).

13. The tower (100) of any of claims 11 or 12, wherein the joining means (30, 40) comprises an axis (39, 49), wherein the upper flange (35) of the at least one first concrete section (50) comprises an inner third (35'), a central third (35‴) and an outer third (35"), wherein the axis (39, 49) of the joining means (30, 40) goes through the upper flange (35) of the at least one first concrete section (50) in the central third (35").

14. The tower (100) of any of claims 11 or 12 and any of claims 1 to 4, wherein the tower (100) comprises a central vertical axis (100') and each of the joining means (30, 40) comprise an axis (39, 49), wherein the axis (39, 49) of the joining means (30, 40) or its projection is closer to the central vertical axis (100') than the inner surface (3) of the central area (2).

15. The tower (100) of any of previous claims wherein the adapter (20) further comprises:
- an upper flange (23) configured to join the adapter (20) to the at least one second tower section or to the wind turbine component.

## Patentansprüche

1. Turm (100) einer Windkraftanlage, umfassend:
- mindestens einen ersten Turmabschnitt (50);
- einen Adapter (20), der zwischen dem mindestens einen ersten Turmabschnitt (50) und mindestens einem zweiten Turmabschnitt oder einer Windkraftanlagenkomponente angeordnet ist,
wobei der mindestens eine erste Turmabschnitt (50) ein Betonturmabschnitt ist, der einen oberen Flansch (35) mit einem Außendurchmesser (D1) aufweist; und wobei der Adapter (20) Folgendes umfasst:
- einen unteren Flansch (22), der ausgestaltet ist, um den Adapter (20) mit dem oberen Flansch (35) des mindestens einen ersten Turmabschnitts (50) zu verbinden;
wobei der untere Flansch (22) des Adapters (20) einen Außendurchmesser (d1) aufweist;
wobei der Außendurchmesser (D1) des oberen Flansches (35) des mindestens einen ersten Turmabschnitts (50) größer ist als der Außendurchmesser (d1) des unteren Flansches (22) des Adapters (20);
wobei der mindestens eine erste Turmabschnitt (50) mindestens ein Betonsegment (1) umfasst, das seinerseits Folgendes umfasst:
- einen zentralen Bereich (2), der eine Innenfläche (3) und eine Außenfläche (4) umfasst, der sich unterhalb des oberen Flansches (35) des mindestens einen ersten Turmabschnitts (50) befindet, und eine imaginäre zentrale Fläche (5), die sich in gleichem Abstand von der Innenfläche (3) wie von der Außenfläche (4) befindet;
wobei eine vertikale Projektion eines durch den Außendurchmesser (d1) des unteren Flansches (22) des Adapters (20) definierten Umfangs die imaginäre zentrale Fläche (5) schneidet; und
**dadurch gekennzeichnet, dass**
eine Projektion der Außenfläche (4) des zentralen Bereichs (2) des mindestens einen Betonsegments (1) in einer Höhe, in der der untere Flansch (22) des Adapters (20) angeordnet ist, im Wesentlichen mit dem Außendurchmesser (d1) des Adapters (20) übereinstimmt.

2. Turm (100) nach Anspruch 1, wobei die vertikale Projektion des durch den Außendurchmesser (d1) des unteren Flansches (22) des Adapters (20) definierten Umfangs ferner die Außenfläche (4) des mindestens einen Betonsegments (1) an einem oberen Ende (2') des zentralen Bereichs (2) schneidet.

3. Turm (100) nach einem der Ansprüche 1 oder 2, wobei der Adapter (20) ferner einen zentralen Abschnitt (21) aufweist, der mit dem unteren Flansch (22) verbunden ist, wobei sowohl der zentrale Abschnitt (21) als auch der untere Flansch (22) eine Innenfläche (27) aufweisen, wobei die imaginäre zentrale Fläche (5) die Innenfläche (27) schneidet.

4. Turm (100) nach Anspruch 3, wobei die imaginäre zentrale Fläche (5) die Innenfläche (27) in der Nähe des unteren Flansches (22) schneidet.

5. Turm (100) nach einem der vorhergehenden Ansprüche, wobei die Innenfläche (3) des zentralen Bereichs (2) einen Innendurchmesser (d3) aufweist, wobei der Außendurchmesser (d1) des unteren Flansches (22) des Adapters (20) kleiner ist als der Innendurchmesser (D3) der Innenfläche (3) des zentralen Bereichs (2) des mindestens einen Betonsegments (1).

6. Turm (100) nach einem der vorhergehenden Ansprüche, wobei der untere Flansch (22) des Adapters (20) einen Innendurchmesser (d2) und der obere Flansch (35) des mindestens einen ersten Turmabschnitts (50) einen Innendurchmesser (D2) aufweist, wobei ein Versatz zwischen dem Außendurchmesser (D1) des oberen Flansches (35) des mindestens einen ersten Turmabschnitts (50) und dem Außendurchmesser (d1) des unteren Flansches (22) des Adapters (20) im Wesentlichen dem Versatz zwischen dem Innendurchmesser (d2) des unteren Flansches (22) des Adapters (20) und dem Innendurchmesser (D2) des oberen Flansches (35) des mindestens einen ersten Turmabschnitts (50) entspricht.

7. Turm (100) nach einem der Ansprüche 1 bis 4, wobei der zentrale Bereich (2) des mindestens einen Betonsegments (1) des mindestens einen ersten Turmabschnitts (50) eine erste Wandstärke (WT1) aufweist, die als Abstand zwischen der Innenfläche (3) und der Außenfläche (4) definiert ist; und
wobei das mindestens eine Betonsegment (1) des mindestens einen ersten Turmabschnitts (50) Folgendes umfasst:
- mindestens einen oberen Verbindungsbereich (7), der den oberen Flansch (35) umfasst, wobei der mindestens eine obere Verbindungsbereich (7) ausgebildet ist, um mittels des oberen Flansches (35) mit dem Adapter (20) verbunden zu werden, wobei der mindestens eine obere Verbindungsbereich (7) eine zweite Wandstärke (WT2) aufweist, die größer ist als die erste Wandstärke (WT1).

8. Turm (100) nach Anspruch 7, wobei die zweite Wandstärke (WT2) eine nach innen gerichtete Stärkenzunahme (IT) in Bezug auf die erste Wandstärke (WT1) aufweist.

9. Turm (100) nach einem der Ansprüche 7 oder 8, wobei die zweite Wandstärke (WT2) eine nach außen gerichtete Stärkenzunahme (OT) in Bezug auf die erste Wandstärke (WT1) aufweist.

10. Turm (100) nach Anspruch 9, wobei die Außenfläche (4) des zentralen Bereichs (2) eine erste Neigung zur zentralen Fläche (5) aufweist und die nach außen gerichtete Stärkenzunahme (OT) der zweiten Wandstärke (WT2) mindestens einen schrägen Teil (9) aufweist, der wiederum eine zweite Neigung zur zentralen Fläche (5) aufweist, wobei die zweite Neigung größer ist als die erste Neigung.

11. Turm (100) nach einem der vorhergehenden Ansprüche, ferner umfassend Verbindungselemente (30, 40), die ausgebildet sind, um den Adapter (20) mit dem mindestens einen ersten Turmabschnitt (50) zu verbinden.

12. Turm (100) nach Anspruch 11, wobei jedes der Verbindungsmittel (30, 40) Spannelemente (30) umfasst, die zum Spannen des Turms ausgestaltet sind und/oder Bolzen (40), die ausgestaltet, um den Adapter (20) mit dem mindestens einen ersten Betonabschnitt (50) zu verbinden.

13. Turm (100) nach einem der Ansprüche 11 oder 12, wobei das Verbindungsmittel (30, 40) eine Achse (39, 49) aufweist, wobei der obere Flansch (35) des mindestens einen ersten Betonabschnitts (50) ein inneres Drittel (35'), ein zentrales Drittel (35"') und ein äußeres Drittel (35") aufweist, wobei die Achse (39, 49) des Verbindungsmittels (30, 40) im zentralen Drittel (35") durch den oberen Flansch (35) des mindestens einen ersten Betonabschnitts (50) verläuft.

14. Turm (100) nach einem der Ansprüche 11 oder 12 und einem der Ansprüche 1 bis 4, wobei der Turm (100) eine zentrale vertikale Achse (100') aufweist und jedes der Verbindungsmittel (30, 40) eine Achse (39, 49) aufweist, wobei die Achse (39, 49) des Verbindungsmittels (30, 40) oder seine Projektion näher an der zentralen vertikalen Achse (100') liegt als die Innenfläche (3) des zentralen Bereichs (2).

15. Turm (100) nach einem der vorhergehenden Ansprüche, wobei der Adapter (20) ferner Folgendes umfasst:
- einen oberen Flansch (23), der ausgebildet ist, um den Adapter (20) mit dem mindestens einen zweiten Turmabschnitt oder mit der Windturbinenkomponente zu verbinden.

## Revendications

1. Tour (100) d'une éolienne comprenant :
- au moins une première section de tour (50) ;
- un adaptateur (20) disposé entre l'au moins une première section de tour (50) et au moins une deuxième section de tour ou un composant d'éolienne,
dans laquelle l'au moins une première section de tour (50) est une section de tour en béton comprenant une bride supérieure (35) ayant un diamètre extérieur (D1) ; et
dans laquelle l'adaptateur (20) comprend :
- une bride inférieure (22) conçue pour joindre l'adaptateur (20) à la bride supérieure (35) de l'au moins une première section de tour (50) ;
dans laquelle la bride inférieure (22) de l'adaptateur (20) comprend un diamètre extérieur (d1) ;
dans laquelle le diamètre extérieur (D1) de la bride supérieure (35) de l'au moins une première section de tour (50) est supérieur au diamètre extérieur (d1) de la bride inférieure (22) de l'adaptateur (20) ;
dans laquelle l'au moins une première section de tour (50) comprend au moins un segment en béton (1) qui comprend à son tour :
- une zone centrale (2) comprenant une surface interne (3) et une surface externe (4) située sous la bride supérieure (35) de l'au moins une première section de tour (50), et une surface centrale imaginaire (5) située à la même distance de la surface interne (3) que de la surface externe (4) ;
dans laquelle une projection verticale d'une circonférence définie par le diamètre extérieur (d1) de la bride inférieure (22) de l'adaptateur (20) coupe la surface centrale imaginaire (5) ; et
**caractérisée en ce que**
une projection de la surface externe (4) de la zone centrale (2) de l'au moins un segment en béton (1) à une hauteur où la bride inférieure (22) de l'adaptateur (20) est disposée, coïncide sensiblement avec le diamètre extérieur (d1) de l'adaptateur (20).

2. Tour (100) selon la revendication 1, dans laquelle la projection verticale de la circonférence définie par le diamètre extérieur (d1) de la bride inférieure (22) de l'adaptateur (20) croise en outre la surface externe (4) de l'au moins un segment en béton (1) dans une extrémité supérieure (2') de la zone centrale (2).

3. Tour (100) selon l'une quelconque des revendications 1 ou 2, dans laquelle l'adaptateur (20) comprend en outre une partie centrale (21) jointe à la bride inférieure (22), dans laquelle la partie centrale (21) et la bride inférieure (22) comprennent toutes deux une surface interne (27), dans laquelle la surface centrale imaginaire (5) coupe la surface interne (27).

4. Tour (100) selon la revendication 3, dans laquelle la surface centrale imaginaire (5) coupe la surface interne (27) à proximité de la bride inférieure (22).

5. Tour (100) selon l'une quelconque des revendications précédentes, dans laquelle la surface interne (3) de la zone centrale (2) comprend un diamètre intérieur (d3), dans laquelle le diamètre extérieur (d1) de la bride inférieure (22) de l'adaptateur (20) est inférieur au diamètre intérieur (D3) de la surface interne (3) de la zone centrale (2) de l'au moins un segment en béton (1).

6. Tour (100) selon l'une quelconque des revendications précédentes, dans laquelle la bride inférieure (22) de l'adaptateur (20) comprend un diamètre intérieur (d2) et la bride supérieure (35) de l'au moins une première section de tour (50) comprend un diamètre intérieur (D2), dans laquelle un décalage entre le diamètre extérieur (D1) de la bride supérieure (35) de l'au moins une première section de tour (50) et le diamètre extérieur (d1) de la bride inférieure (22) de l'adaptateur (20) est sensiblement le même qu'un décalage entre le diamètre intérieur (d2) de la bride inférieure (22) de l'adaptateur (20) et le diamètre intérieur (D2) de la bride supérieure (35) de l'au moins une première section de tour (50).

7. Tour (100) selon l'une quelconque des revendications 1 à 4, dans laquelle la zone centrale (2) de l'au moins un segment en béton (1) de l'au moins une première section de tour (50) comprend une première épaisseur de paroi (WT1) définie comme la distance entre la surface interne (3) et la surface externe (4) ; et
dans laquelle l'au moins un segment en béton (1) de l'au moins une première section de tour (50) comprend :
- au moins une zone de liaison supérieure (7) comprenant la bride supérieure (35), dans laquelle l'au moins une zone de liaison supérieure (7) est conçue pour être reliée à l'adaptateur (20) au moyen de la bride supérieure (35), dans laquelle l'au moins une zone de liaison supérieure (7) comprend une seconde épaisseur de paroi (WT2) qui est supérieure à la première épaisseur de paroi (WT1).

8. Tour (100) selon la revendication 7, dans laquelle la seconde épaisseur de paroi (WT2) comprend une augmentation d'épaisseur vers l'intérieur (IT) par rapport à la première épaisseur de paroi (WT1).

9. Tour (100) selon l'une quelconque des revendications 7 ou 8, dans laquelle la seconde épaisseur de paroi (WT2) comprend une augmentation d'épaisseur vers l'extérieur (OT) par rapport à la première épaisseur de paroi (WT1).

10. Tour (100) selon la revendication 9, dans laquelle la surface externe (4) de la zone centrale (2) comprend une première pente par rapport à la surface centrale (5) et l'augmentation d'épaisseur vers l'extérieur (OT) de la seconde épaisseur de paroi (WT2) comprend au moins une partie oblique (9) qui comprend à son tour une seconde pente par rapport à la surface centrale (5), dans laquelle la seconde pente est supérieure à la première pente.

11. Tour (100) selon l'une quelconque des revendications précédentes, comprenant en outre des éléments de jonction (30, 40) conçus pour joindre l'adaptateur (20) à l'au moins une première section de tour (50).

12. Tour (100) selon la revendication 11, dans laquelle chacun des moyens de jonction (30, 40) comprend des éléments de tension (30) également conçus pour tendre la tour et/ou des boulons (40) conçus pour joindre l'adaptateur (20) à l'au moins une première section en béton (50).

13. Tour (100) selon l'une quelconque des revendications 11 ou 12, dans laquelle le moyen de jonction (30, 40) comprend un axe (39, 49), dans lequel la bride supérieure (35) de l'au moins une première section en béton (50) comprend un tiers interne (35'), un tiers central (35"') et un tiers externe (35"), dans laquelle l'axe (39, 49) des moyens de jonction (30, 40) passe à travers la bride supérieure (35) de l'au moins une première section en béton (50) dans le tiers central (35").

14. Tour (100) selon l'une quelconque des revendications 11 ou 12 et selon l'une quelconque des revendications 1 à 4, dans laquelle la tour (100) comprend un axe vertical central (100') et chacun des moyens de jonction (30, 40) comprend un axe (39, 49), dans laquelle l'axe (39, 49) du moyen de jonction (30, 40) ou sa projection est plus proche de l'axe vertical central (100') que la surface interne (3) de la zone centrale (2).

15. Tour (100) selon l'une quelconque des revendications précédentes dans laquelle l'adaptateur (20) comprend en outre :
- une bride supérieure (23) conçue pour joindre l'adaptateur (20) à l'au moins une second section de tour ou au composant d'éolienne.
